(19) Europäisches Patentamt
European Patent Office
Office européen des brevets

(11) **EP 1 480 000 B1**

(12) **FASCICULE DE BREVET EUROPEEN**

(45) Date de publication et mention
de la délivrance du brevet:
**09.09.2015 Bulletin 2015/37**

(51) Int Cl.:
***G01S 19/53*** *(2010.01)*     ***F41G 7/34*** *(2006.01)*
***F41G 7/36*** *(2006.01)*

(21) Numéro de dépôt: **04291034.9**

(22) Date de dépôt: **21.04.2004**

(54) **Procédé de controle de la trajectoire d'un projectile girant**

Verfahren zur Lenkung der Flugbahn eines drehenden Geschosses

Method for controlling the trajectory of a spinning projectile

(84) Etats contractants désignés:
**AT BE BG CH CY CZ DE DK EE ES FI FR GB GR HU IE IT LI LU MC NL PL PT RO SE SI SK TR**

(30) Priorité: **19.05.2003 FR 0306003**

(43) Date de publication de la demande:
**24.11.2004 Bulletin 2004/48**

(73) Titulaire: **NEXTER Munitions**
**78000 Versailles (FR)**

(72) Inventeur: **Lamorlette, Gérard**
**18000 Bourges (FR)**

(74) Mandataire: **Célanie, Christian**
**Cabinet Célanie**
**5 Avenue de Saint Cloud**
**B.P. 214**
**78002 Versailles Cedex (FR)**

(56) Documents cités:
**EP-A- 0 583 972**    **EP-A- 0 905 473**
**EP-A- 1 006 335**    **WO-A-03/078916**
**DE-A- 4 025 515**    **US-A- 5 344 105**
**US-A- 5 432 520**    **US-A- 6 163 021**

**Description**

Le domaine technique de l'invention est celui des procédés permettant le contrôle de la trajectoire d'un projectile girant et notamment le contrôle de la trajectoire d'un projectile tiré par un canon.

Les projectiles tirés par canon ont théoriquement une trajectoire balistique bien connue. Cependant des facteurs externes (tels le vent, la température et la pression atmosphérique) ou internes (tels la vitesse initiale et les coefficients aérodynamiques) et non reproductibles sont susceptibles d'influer sur la trajectoire.

Il en résulte des écarts au niveau de l'impact au sol du projectile qui, à la portée maximale actuelle de l'artillerie (35 km environ), sont voisins, en écarts-type, de 500 m en portée et de 150 m en direction.

Afin d'améliorer la précision des tirs, il est connu de corriger la trajectoire du projectile en portée par le déploiement d'un ou plusieurs aérofreins. Le brevet FR2786561 décrit une telle solution. Les écarts-type en précision, sont alors, à 35 Km, de l'ordre de la centaine de mètres en portée comme en direction.

Une autre solution connue est d'assurer un contrôle autonome et continu de la trajectoire au moyen de gouvernes aérodynamiques. Ces dernières sont commandées par un autopilote situé à bord du projectile. Les écarts-types en précision peuvent alors être réduits à l'ordre de la dizaine de mètres en portée comme en direction. De plus, il devient possible en utilisant l'effet planant, d'accroître de manière notable la portée maximale (qui peut alors dépasser 65 km sans propulsion additionnelle).

Ces projectiles autonomes en vol sont dotés d'un dispositif de positionnement par satellite (plus connu sous l'acronyme anglo saxon "GPS" signifiant «Global Positioning System») qui leur permet de se localiser sur trajectoire. Le projectile reçoit avant tir une programmation qui lui donne les coordonnées de la cible. Il détermine alors lui-même sa position réelle en vol, et élabore, à l'aide des informations fournies par une centrale inertielle embarquée et au moyen d'algorithmes appropriés, les ordres de commande destinés aux gouvernes.

Le projectile incorpore également une centrale inertielle, comprenant accéléromètres et gyromètres, et qui fournit (dans un repère lié au projectile) les composantes du vecteur instantané de rotation et de l'accélération non gravitationnelle à laquelle est soumis le projectile.

Trois intégrations effectuées en utilisant les composantes du vecteur instantané de rotation peuvent alors fournir les angles d'Euler du projectile (assiette, cap et roulis) qui sont nécessaires à l'élaboration des ordres de commande de la trajectoire.

Une telle solution est utilisée de façon classique dans les projectiles tels que les missiles de croisière qui sont pas ou peu girants (rotation de l'ordre de 0,5 t/s) et qui ne sont soumis qu'à des accélérations longitudinales réduites (de l'ordre de 10 fois l'accélération gravitationnelle g). Ces projectiles incorporent alors des centrales inertielles très précises et coûteuses.

De telles centrales inertielles ne sont pas utilisables dans les projectiles tirés canon qui sont soumis aux accélérations importantes subies par le projectile lors du tir. Par ailleurs le coût des centrales inertielles utilisées dans de tels projectiles doit être le plus réduit possible.

Les centrales inertielles pouvant être utilisées dans les projectiles tirés canons ont une précision moyenne et elles présentent des dérives conduisant de façon statistiquement importante à une erreur en position de roulis pouvant atteindre 90°. Il devient alors impossible de piloter le projectile qui ne peut atteindre sa cible. Ce phénomène est encore accentué quand la vitesse d'autorotation du projectile n'est pas nulle.

Une solution précédemment envisagée consiste à évaluer la position initiale en roulis en appliquant, lors d'une phase préliminaire, des ordres de pilotage de référence et en déduisant la position en roulis de la mesure des composantes de la vitesse par le localisateur GPS.

Cependant ce procédé présente comme inconvénient que le guidage du projectile n'est plus assuré pendant la phase d'application des ordres de pilotage de référence. Il en résulte une réduction de performances (réduction de la portée maximale et dégradation de la précision à une portée donnée).

On connaît encore le dispositif décrit dans le brevet US-6163021 concernant un système de navigation pour projectile girant associant des mesures magnétiques et d'accélérations. Le GPS présent dans ce dispositif fournit des données à un filtre de Kalman qui incorpore les données de navigation issues du calculateur. Dans ce dispositif le GPS n'intervient que pour corriger par filtrage les résultats du calculateur de navigation. Ce dispositif nécessite obligatoirement des mesures magnétiques pour permettre la navigation. Il n'y a pas de correction des accélérations.

C'est le but de l'invention que de proposer un procédé permettant de pallier de tels inconvénients.

Ainsi le procédé selon l'invention permet d'assurer de façon fiable une excellente précision du guidage, même pour un projectile girant et tiré canon.

Le procédé selon l'invention permet ainsi d'assurer le guidage avec une centrale inertielle à bas coût et de précision moyenne. Il permet donc de réduire significativement le coût des autodirecteurs des projectiles guidés quel que soit le type de projectile (projectile tiré par canon ou bien missile ou roquette).

Ainsi l'invention a pour objet un procédé de contrôle de la trajectoire d'un projectile girant, procédé dans lequel on mesure au moyen d'une centrale inertielle les accélérations du projectile suivant trois axes dans un repère lié au projectile de façon à élaborer les ordres de pilotage de la trajectoire du projectile, procédé dans lequel :

- on mesure également périodiquement à l'aide d'un système de positionnement par satellite (GPS) les composantes $(V_X, V_Y, V_Z)$ du vecteur vitesse V du projectile suivant trois axes et dans un repère terrestre (GX,GY,GZ),
- on évalue à partir de ces mesures les composantes $(\Gamma_X, \Gamma_Y, \Gamma_Z)$ du vecteur accélération $\Gamma$ dans le même repère terrestre (GX,GY,GZ),
- on recalcule, à chacune de ces mesures et évaluations périodiques par le GPS, les valeurs des angles d'Euler du projectile en combinant les résultats des mesures de vitesse (V) et accélération ($\Gamma$) données par le GPS et celles de l'accélération données par la centrale inertielle, caractérisé en ce que pour les calculs des angles d'Euler et/ou de pilotage on utilise, en lieu et place des valeurs d'accélérations mesurées par la centrale inertielle, des valeurs d'accélérations dites corrigées :

$$\gamma_{CX} = \gamma_X \, \Gamma/\gamma \; ; \; \gamma_{CY} = \gamma_Y \, \Gamma/\gamma \; ; \; \gamma_{CZ} = \gamma_Z \, \Gamma/\gamma$$

expressions dans lesquelles $\Gamma = \sqrt{(\Gamma_X^2 + \Gamma_Y^2 + \Gamma_Z^2)}$ est la norme du vecteur accélération du projectile dans le repère terrestre tel qu'évalué grâce au système de positionnement et $\gamma = \sqrt{(\gamma_X^2 + \gamma_Y^2 + \gamma_Z^2)}$ est la norme du vecteur accélération du projectile dans le repère lié au projectile tel que mesuré par la centrale inertielle.

Selon un mode particulier de réalisation de l'invention, lorsque le projectile a une architecture de type canard (c'est à dire piloté par des gouvernes disposées au niveau d'une partie avant), l'évaluation des angles d'Euler est réalisée pendant la phase de vol piloté à partir d'un calcul de la constante de temps d'incidence $\Lambda = \dfrac{-Ps - \sqrt{\Delta'}}{\Gamma^2}$ , expression dans laquelle $P_s$ est le produit scalaire du vecteur vitesse V et du vecteur accélération $\Gamma$ mesurés ou calculés à partir du GPS (Ps=V.$\Gamma$) et $\Delta'$ est un discriminant réduit $\Delta' = (\Gamma^2 V^2 - P_s^2)\dfrac{\gamma_{Cx}^2}{\gamma_{CT}^2}$ , expression dans laquelle $\gamma_{CT}$ est une valeur corrigée de l'accélération transversale au projectile $(\gamma_{CT} = \sqrt{(\gamma_{Cy}^2 + \gamma_{Cz}^2)})$ .

D'une façon générale, lorsque le projectile est en phase de vol balistique, on forcera la valeur de la constante de temps d'incidence A à zéro et on calculera les angles d'Euler du projectile par les formules suivantes :

- les angles d'assiette $\theta$ et de cap $\psi$ sont égaux à :

$$\theta = \arcsin(V_Z/V) \; ; \; \psi = \arcsin(V\gamma/V\cos\theta)$$

- l'angle de roulis $\varphi$ étant défini par :

$$\cos\varphi = \frac{q}{\sqrt{q^2 + r^2}} \qquad \sin\varphi = \frac{-r}{\sqrt{q^2 + r^2}}$$

expressions dans lesquelles q et r sont respectivement les vitesses angulaires de tangage et de lacet du projectile dans un repère lié au projectile, vitesses mesurées par la centrale inertielle.

Selon une autre caractéristique, lorsque le projectile est en phase de vol piloté :

on évaluera les angles d'Euler du projectile par les formules suivantes :

- angle d'assiette $\theta$ (compris entre -$\pi$/2 et +$\pi$/2) :

$$\theta = \arcsin\left(\frac{V_z + \Lambda \, \Gamma_z}{U + \Lambda \gamma_{cx}}\right)$$

- angle de cap $\psi$ (compris entre -n et $+\pi$) :

$$\cos\psi = \frac{V_X + \Lambda\Gamma_X}{(U + \Lambda\gamma_{CX})\cos\theta}$$

$$\sin\psi = \frac{V_Y + \Lambda\Gamma_Y}{(U + \Lambda\gamma_{CX})\cos\theta}$$

- angle de roulis $\varphi$ :

$$\cos\varphi = \frac{\gamma_{z0}\gamma_{cz} + \gamma_{y0}\gamma_{cy}}{\gamma_{cy}^2 + \gamma_{cz}^2}$$

$$\sin\varphi = \frac{\gamma_{z0}\gamma_{cy} - \gamma_{y0}\gamma_{cz}}{\gamma_{cy}^2 + \gamma_{cz}^2}$$

expressions dans lesquelles :

$$\gamma_{Y0} = (V_X \sin\psi - V_Y \cos\psi) / \Lambda,$$

$$\gamma_{Z0} = (U \sin\theta - V_Z) / \Lambda\cos\theta$$

et

$$U^2 = V^2 - \Lambda^2\gamma_{cT}^2.$$

Avantageusement, l'évaluation des composantes $(\Gamma_X, \Gamma_Y, \Gamma_Z)$ du vecteur accélération $\Gamma$ dans le repère terrestre (GX,GY,GZ) sera réalisée à partir de N mesures périodiques effectuées par le GPS des composantes $(V_X, V_Y, V_Z)$ du vecteur vitesse V du projectile dans le même repère terrestre et avec un intervalle d'échantillonage $\Delta t$, mesures auxquelles sera appliqué un filtrage de Kalman.

L'invention sera mieux comprise à la lecture de la description qui va suivre d'un mode particulier de réalisation, description faite en référence aux dessins annexés et dans lesquels :

- la figure 1 est une vue en perspective d'un exemple de projectile planant canard tiré canon pouvant mettre en oeuvre le procédé selon l'invention,
- la figure 2 est un schéma montrant les repéres terrestre et liés à un tel projectile ainsi que la localisation des angles d'Euler,
- la figure 3 est un schéma localisant les angles d'incidence et de dérapage pour un projectile et par rapport à un repère lié au projectile.

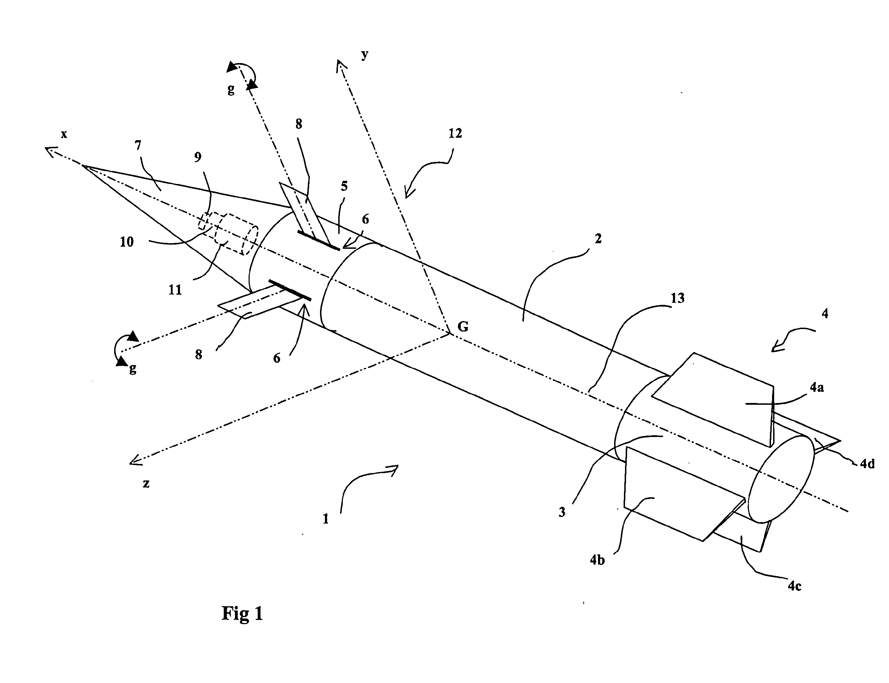

La figure 1 représente un projectile 1 d'artillerie planant qui comporte un corps 2 à l'intérieur duquel est logée une charge utile (non représentée), par exemple un chargement explosif ou un chargement de sous munitions.

Le corps 2 se termine par une portion arrière 3 qui pourra renfermer un propulseur ou bien un générateur pyrotechnique permettant de diminuer la traînée de culot (de tels générateurs sont plus connus sous la dénomination anglo saxonne de "base bleed").

La portion arrière 3 porte un empennage cruciforme 4 formé de quatre ailettes 4a, 4b, 4c et 4d fixes. Ces ailettes seront par exemple réalisées sous la forme de tôles d'acier enroulées autour du corps du projectile et se déploieront à la sortie du tube de l'arme sous l'effet de leur élasticité (voir notamment le brevet DE4025515).

Le corps 2 porte à sa partie avant un dispositif de pilotage 5 qui comprend quatre gouvernes canard 8 cruciformes qui sont déployées au travers de fentes 6 aménagées sur le corps du projectile. Ici seules deux gouvernes sont visibles.

Les gouvernes sont associées deux par deux, chaque paire de gouverne matérialisant un plan de pilotage (tangage ou lacet) .

Les gouvernes 8 sont commandées en rotation par des motoreducteurs (non représentés). La rotation de chaque gouverne se fait autour d'un axe g sensiblement parallèle au bord d'attaque de la gouverne et suivant une direction radiale du projectile.

Le projectile se termine à sa partie avant par une ogive 7 qui renferme un calculateur électronique 11 assurant le guidage et le pilotage. L'ogive renferme également une centrale inertielle 10 et un dispositif de positionnement par satellite (GPS) 9.

Le projectile 1 est tiré par un canon d'artillerie. Des moyens non représentés permettent le tir en réduisant la vitesse de rotation communiquée au projectile (ceinture dérapante par exemple) et d'autres moyens assurent le maintien puis la libération de l'empennage arrière 4 ainsi que des gouvernes avant 8. On pourra se reporter au brevet EP905473 pour une description plus complète de ces moyens qui ne forment pas l'objet de la présente invention.

Un repère géométrique 12 orthonormé lié au projectile est représenté sur la figure 1. Ce repère comprend un axe Gx confondu avec l'axe 13 du projectile, un axe Gy qui est l'axe de tangage et un axe Gz qui est l'axe de lacet. Le projectile est soumis sur sa trajectoire à des vitesses de rotation (roulis, tangage et lacet) et à des accélérations le long des trois axes ainsi définis. Une action sur les gouvernes 8 permet de façon connue de modifier les accélérations auxquelles est soumis le projectile et de corriger ainsi sa trajectoire.

D'une façon classique, les coordonnées d'un objectif pour un projectile sont exprimées dans un repère terrestre et elles sont introduites (avant tir ou sur trajectoire) dans le calculateur 11 par un dispositif de programmation.

Le dispositif de positionnement par satellite (GPS) 9 permet à tout moment de connaître la position du projectile dans le repère terrestre ainsi que les composantes du vecteur Vitesse (V). Il est possible par calcul de déterminer à partir de la vitesse V les composantes du vecteur accélération ($\Gamma$) de ce projectile dans le repère terrestre.

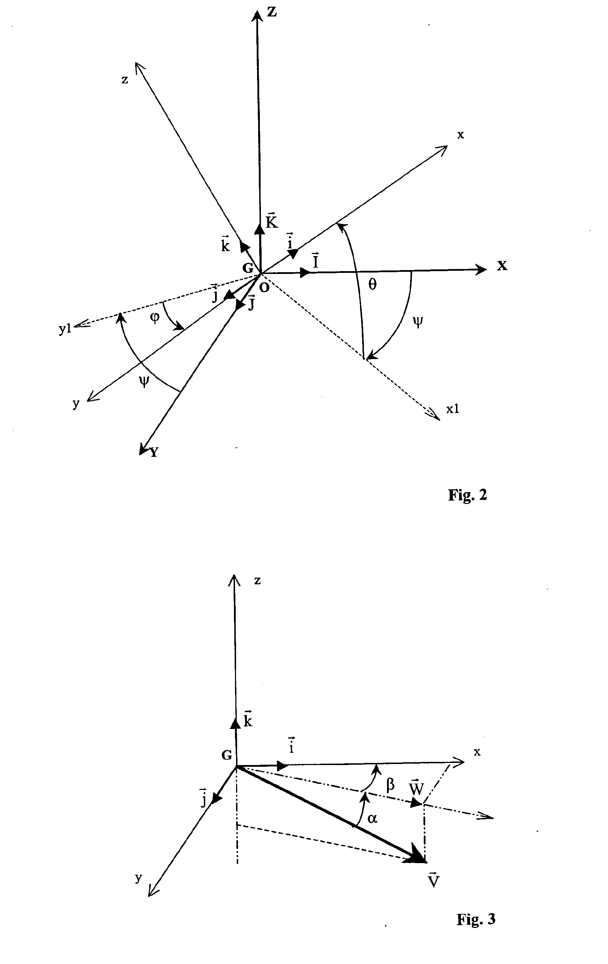

La figure 2 montre le repère géométrique Gx,Gy,Gz orthonormé et lié au projectile (non représenté). Ce repère comprend un axe Gx (ou axe de roulis) confondu avec l'axe du projectile, un axe Gy qui est l'axe de tangage du projectile et un axe Gz qui est l'axe de lacet (vecteurs unitaires sur ces axes : $\vec{i},\vec{j},\vec{k}$).

La figure 2 montre également le repère terrestre ramené au centre de gravité G qui comprend les axes GX, GY et GZ (vecteurs unitaires: $\overrightarrow{I,J,K}$).

Le projectile est soumis sur sa trajectoire à des vitesses et à des accélérations le long des trois axes ainsi définis. D'une façon classique, une action sur les gouvernes 8 de pilotage du projectile permet de modifier les accélérations auxquelles est soumis le projectile 1 et de corriger ainsi sa trajectoire.

A cet effet le calculateur électronique 11 élabore des consignes d'accélérations souhaitées suivant les directions de lacet et de tangage.

Cette élaboration se fait d'une façon classique par une loi de guidage, par exemple la loi de navigation proportionnelle. Cette loi de guidage utilise les informations relatives à la localisation de la cible (repère terrestre), celles relatives à la localisation du projectile (repère terrestre) et des données de vitesse et d'accélération du projectile 1 dans son propre repère.

Ces données de vitesse et d'accélération du projectile sont fournies par la centrale inertielle 10 portée par le projectile.

Les lois de guidage connues utilisent habituellement (quand les positions respectives du projectile et de sa cible sont connues dans un repère fixe) un calcul des angles d'Euler ($\psi$, $\theta$, $\varphi$). Ces angles permettent de localiser angulairement le repère GxGyGz lié au projectile par rapport au repère terrestre fixe GXGYGZ. Il est alors possible de convertir les mesures de vitesse et accélérations effectuées dans le repère du projectile en des grandeurs évaluées dans le repère terrestre.

Comme le montre la figure 2, l'angle $\psi$ ou angle de cap est l'angle entre la direction GX fixe et la projection $Gx_1$ sur le plan GXY de l'axe du projectile Gx.

L'angle $\theta$ ou angle d'assiette est l'angle entre l'axe du projectile Gx et la projection $Gx_1$ de cet axe sur le plan GXGY.

L'angle de roulis $\varphi$ est l'angle entre l'axe Gy et l'axe $Gy_1$ orthogonal à l'axe $Gx_1$.

Comme cela a été précisé précédemment, les projectiles connus déterminent les angles d'Euler à partir des intégrations de combinaisons des trois composantes du vecteur instantané de rotation dans un repère lié au projectile tel qu'il est mesuré par la centrale inertielle embarquée 10.

Ce calcul nécessite une centrale inertielle très précise et présentant une dérive faible (surtout du point de vue de la mesure de l'angle de roulis).

Conformément à l'invention les angles d'Euler seront déterminés en mettant en oeuvre un algorithme qui utilise une mesure périodique des composantes ($V_x, V_y, V_z$) du vecteur vitesse V du projectile suivant trois axes et dans le repère terrestre (GX,GY,GZ). Cette mesure est assurée par le dispositif localisateur GPS 9.

On utilise tout d'abord les résultats de la mesure de la vitesse V pour calculer les composantes ($\Gamma_X, \Gamma_Y, \Gamma_Z$) du vecteur accélération $\Gamma$ dans le même repère terrestre (GX,GY,GZ).

Parallèlement la centrale inertielle embarquée 10 fournit une mesure des vitesses angulaires du projectile (lacet, tangage et roulis) ainsi qu'une mesure des composantes de l'accélération non gravitationnelle du projectile dans le repère qui lui est lié (Gx,Gy,Gz).

On calcule alors, à chacune de ces mesures et évaluations périodiques par le GPS, les valeurs des angles d'Euler du projectile en combinant les résultats des mesures données par le GPS et celles données par la centrale inertielle.

Ainsi les imprécisions et dérives de la centrale inertielle utilisée sont corrigées à chaque localisation GPS du projectile et les dérives au niveau de l'évaluation des angles d'Euler sont évitées.

La fréquence des localisations pourra être comprise entre 0,1 et 10 Hz.

Il n'est plus nécessaire alors d'appliquer des ordres de pilotage de référence lors d'une phase de vol préliminaire. Le guidage du projectile est donc possible pendant toute la phase de vol contrôlé, ce qui augmente la portée et la précision du projectile.

Lors d'une première phase du procédé selon l'invention on calcule donc les composantes ($\Gamma_X$, $\Gamma_Y$, $\Gamma_Z$) du vecteur accélération $\Gamma$ dans le même repère terrestre (GX,GY,GZ).

Ce calcul peut être mis en oeuvre par un lissage de type Kalman appliqué à différentes valeurs successives de mesure de la vitesse V par le dispositif localisateur GPS 9.

On poura par exemple retenir cinq mesures successives de la vitesse $V_0$, $V_1$, $V_2$, $V_3$ et $V_4$. Chaque mesure étant réalisée avec une période d'échantillonage $\Delta t$.

On a donc par exemple $V_0 = V(t)$, $V_1 = V(t-\Delta t)$, $V_2 = V(t-2\Delta t)$, $V_3 = V(t-3\Delta t)$ et $V_4 = V(t-4\Delta t)$.

Une décomposition en série de type Mac Laurin pour les différentes vitesses $V_0$, $V_1$, $V_2$, $V_3$ et $V_4$ conduit à écrire

$$V(t-k\Delta t) = V^{(0)} - \frac{k\Delta t}{1!}V^{(1)} + \frac{k^2\Delta t^2}{2!}V^{(2)} - \frac{k^3\Delta t^3}{3!}V^{(3)} + \frac{k^4\Delta t^4}{4!}V^{(4)} + \dots$$

Expression dans laquelle les termes $V^{(n)}$ sont les dérivées de rang n de la vitesse V. Dans cette décomposition, les termes de dérivée d'ordre supérieur à 4 sont négligés.

En écrivant cette expression pour les cinq valeurs mesurées de V on obtient un système de cinq équations linéaires à cinq inconnues ($V^{(0)}$, $V^{(1)}$, $V^{(2)}$, $V^{(3)}$, et $V^{(4)}$). Seule l'inconnue $V^{(1)}$ (dérivée première de V) est nécessaire à la détermination des composantes de l'accélération.

La résolution de ce système donne la valeur de la dérivée $V^{(1)}$ en fonction des cinq mesures successives de V, soit

$$V^{(1)} = (25/12\ V_0 - 4\ V_1 + 3V_2 - 16/12\ V_3 + 3/12\ V_4)/\Delta t$$

Cette expression est appliquée au calcul de chacune des composantes de l'accélération à partir de chacune des composantes des cinq vitesses mesurées.

On en déduit ainsi aisément les trois composantes ($\Gamma_X$, $\Gamma_Y$, $\Gamma_Z$) de l'accélération dans le repère terrestre en fonction de la période d'échantillonnage $\Delta t$ et des composantes des cinq vitesses successives mesurées.

On pourra ainsi écrire :

$$\Gamma_X = \frac{\sum_{k=0}^{4} f_k V_{xk}}{\Delta t} \qquad \Gamma_Y = \frac{\sum_{k=0}^{4} f_k V_{yk}}{\Delta t} \qquad \Gamma_Z = \frac{\sum_{k=0}^{4} f_k V_{zk}}{\Delta t} + g$$

Expressions dans lesquelles les $f_k$ correspondent aux coefficients de l'expression $V^{(1)}$ précédente, soit :

$$f_0 = 25/12, \quad f_1 = -4, \quad f_2 = 3, \quad f_3 = -16/12, \quad f_4 = 3/12$$

$V_{xk}$, $V_{yk}$, $V_{zk}$ sont les trois composantes d'un vecteur $V_k$ mesuré, g est l'accélération de la pesanteur.

La période de mesure $\Delta t$ sera choisie en fonction des fréquences de mouvement pendulaire du projectile. On adoptera un $\Delta t$ de l'ordre de 0,10 seconde pour un projectile ayant une fréquence de mouvement pendulaire de l'ordre de 1 Hz.

Au cours d'une deuxième étape du procédé selon l'invention on va calculer des valeurs d'accélérations dites

corrigées :

$$\gamma_{CX} = \gamma_X\ \Gamma/\gamma\ ;\ \gamma_{CY} = \gamma_Y\ \Gamma/\gamma\ ;\ \gamma_{CZ} = \gamma_Z\ \Gamma/\gamma$$

expressions dans lesquelles $\Gamma = \sqrt{(\Gamma_X^2 + \Gamma_Y^2 + \Gamma_Z^2)}$ est la norme du vecteur accélération du projectile dans le repère terrestre tel qu'elle a été calculée grâce au système de positionnement GPS et $\gamma = \sqrt{(\gamma_X^2 + \gamma_Y^2 + \gamma_Z^2)}$ est la norme du vecteur accélération du projectile dans le repère lié au projectile tel qu'elle est mesurée par la centrale inertielle embarquée.

Ce calcul part du principe que la norme $\Gamma$ mesurée à partir du GPS est la valeur la plus correcte. Il suffit donc d'appliquer aux valeurs d'accélérations $\gamma_X$, $\gamma_Y$ et $y_Z$ mesurées par la centrale inertielle un coefficient corectif $\Gamma/\gamma$ pour obtenir des valeurs corrigées proches de ce que devrait mesurer la centrale inertielle dans le repère lié au projectile. Cette correction est appliquée à toute utilisation future des $\gamma$. La correction s'applique aux accélérations mesurées dans le repère mobile et non aux vitesses angulaires de roulis, tangage et lacet qui sont nécessaires au calcul des angles d'Euler par intégration.

Si on compare les expressions donnant les composantes de l'accélération dans le repère fixe en fonction des angles d'Euler et des composantes de l'accélération dans le repère mobile lié au projectile, on constate qu'un simple rapprochement membre à membre ne permet pas d'évaluer sans ambiguité les angles d'Euler à partir des mesures. En effet il y a une indétermination qui oblige à évaluer au moins un des angles par une autre méthode (par exemple l'angle de roulis).

Selon un premier mode de réalisation de l'invention cette mesure sera réalisée par exemple au moyen d'un capteur distinct tel qu'un magnétomètre. Le procédé selon l'invention permet ainsi de corriger les dérives de la centrale inertielle en remplaçant les valeurs des accélérations mesurées par des valeurs corrigées en tenant compte des informations données par le GPS.

Selon un mode de réalisation préféré de l'invention plus particulièrement adapté aux projectiles de type "canard" (c'est à dire pilotés par des gouvernes disposées au niveau d'une partie avant) et afin de réduire encore le coût du système de guidage, l'invention propose avantageusement un procédé permettant de lever une telle indétermination sans qu'il soit nécessaire de prévoir un autre moyen de mesure du roulis.

Cette indétermination sera levée par le calcul de la constante de temps d'incidence A du projectile.

D'une façon classique la constante de temps d'incidence est une grandeur qui caractérise à une altitude et à une vitesse donnée la manoeuvrabilité d'un projectile.

Pour un projectile canard (c'est à dire piloté par des gouvernes 8 disposées au niveau d'une partie avant), la portance est pratiquement indépendante du braquage du plan de gouverne, et la constante de temps d'incidence est égale à $\Lambda = \dfrac{mV}{\bar{q}SC_{z\alpha}}$ . Expression dans laquelle $\bar{q}$ est la valeur de la pression dynamique ($\bar{q} = 0{,}7p_aM^2$, expression dans laquelle $p_a$ est la pression atmosphérique à l'altitude considérée et M le nombre de Mach), $C_{z\alpha}$ est le gradient de portance aérodynamique, S l'aire de référence du projectile et m la masse du projectile.

La figure 3 montre le repère lié au projectile Gx,Gy,Gz et permet de localiser les angles d'incidence $\alpha$ et de dérapage $\beta$ du projectile. D'une façon connue, l'angle d'incidence $\alpha$ est défini comme l'opposé de l'angle du vecteur vitesse V avec le plan GxGy du projectile, et l'angle de dérapage $\beta$ est défini comme l'opposé de l'angle entre la projection W du vecteur vitesse sur le plan GxGy et l'axe Gx.

La constante de temps d'incidence permet d'exprimer les valeurs des composantes transversales de l'accélération ($\gamma_y$ et $\gamma_z$) dans le repère lié au projectile et en fonction de la vitesse V du projectile.

On écrira ainsi : $\gamma_y = v\beta/A$ et $\gamma_z = V\alpha/\Lambda$

Si on considère par ailleurs que les angles de dérapage et d'incidence sont petits (ce qui est généralement le cas pour un projectile d'artillerie car l'architecture est définie de façon à réduire la traînée, ces angles sont ainsi inférieurs ou égaux à 6°), et que l'on néglige la vitesse du vent, considéré comme une perturbation de moyenne nulle, on pourra écrire la vitesse V sous la forme vectorielle : $\vec{V} = U\vec{i} - V(\beta\vec{j} + \alpha\vec{k})$ ; $\vec{i}, \vec{j}, \vec{k}$ étant les vecteurs unitaires sur les trois axes Gx,Gy,Gz et U étant la norme de la projection du vecteur vitesse V sur l'axe Gx du projectile.

Cette expression permet, en remplaçant les angles de dérapage et d'incidence par leur expression en fonction des accélérations $\gamma_y$ et $\gamma_z$ transversales, d'exprimer la constante de temps d'incidence en fonction de U, V, $\gamma_y$ et $\gamma_z$. On écrira ainsi : $\vec{V} = U\vec{i} - \Lambda(\gamma y\vec{j} + \gamma_z\vec{k})$

Ce qui permet d'écrire en exprimant le carré de la norme des vecteurs : $U^2 = V^2 - \Lambda^2\gamma_T^2$

Expression dans laquelle $\gamma_T^2 = \gamma_y^2 + \gamma_z^2$

Par ailleurs le produit scalaire du vecteur vitesse et du vecteur accélération non gravitationnelle $Ps=\overrightarrow{V.\Gamma}$ s'écrit également :

$$P_S = \gamma_x\ U\ -\ \Lambda\ \gamma_T{}^2.$$

Il est donc possible de calculer la constante de temps d'incidence A directement à partir des valeurs mesurées ou calculées des composantes des vecteurs V, $\Gamma$ (repère fixe) et des composantes mesurées de l'accélération dans le repère du projectile ($\gamma_x$, $\gamma_y$, $\gamma_z$).

A est ainsi la solution d'une équation du second degré :

$$\Lambda^2\ \gamma_T{}^2\Gamma^2\ +\ 2\Lambda\ \gamma_T{}^2\ P_S\ +\ P_S{}^2 -\ \gamma_x{}^2 V^2\ =\ 0$$

Deux cas sont à envisager.

Soit le projectile se trouve en phase balistique, gouvernes repliées, soit le projectile se trouve en phase de vol contrôlé.

Dans le cas d'un projectile girant tiré par un canon, les deux phases interviennent successivement. La phase balistique est la première. Elle correspond au tir par le canon. Aucun pilotage n'est assuré pendant cette phase. Cependant les circuits électroniques seront avantageusement activés et initialisés pendant cette phase balistique et il sera avantageux de corriger les angles d'Euler afin de permettre un pilotage correct du projectile dès son passage à la phase contrôlée.

La phase de vol contrôlée est celle dans laquelle les gouvernes de pilotage aérodynamiques sont déployées et actionnées de manière à obtenir une trajectoire sensiblement rectiligne qui converge vers la cible désignée.

Durant cette phase le projectile est soumis à une force aérodynamique transversale qui compense approximativement le poids du projectile.

D'une façon préférée et classique, et afin de minimiser les facteurs de charge, la transition entre la phase balistique et la phase de vol contrôlée (donc le déploiement des gouvernes « canard ») s'effectue quand l'angle du vecteur vitesse du projectile avec le plan horizontal est égal ou inférieur à celui que fait avec ce même plan horizontal la droite qui relie le projectile à la cible.

L'instant de transition est déterminé aisément par calcul à partir de la mesure par le GPS du vecteur vitesse et de la position du projectile dans le repère terrestre.

En effet les coordonnées de la cible ont été transmises par programmation avant tir ou dans les premiers instants de la trajectoire et le calculateur embarqué peut évaluer à chaque localisation GPS l'orientation de la droite reliant le projectile à la cible puis la comparer au vecteur vitesse mesuré.

Au cours de la phase de vol contrôlé on calcule donc à chaque localisation GPS la constante de temps d'incidence A solution de l'équation du second degré donnée précédemment. On a donc :

$$\Lambda=\frac{-Ps-\sqrt{\Delta'}}{\Gamma^2}$$

Dans cette expression $P_s$ est le produit scalaire du vecteur vitesse V mesuré et du vecteur accélération $\Gamma$ calculé à partir du GPS ($Ps=\overrightarrow{V.\Gamma}$),

$\Delta'$ est le discriminant réduit de l'équation et il est égal à : $\Delta'=(\Gamma^2V^2-P_S^2)\dfrac{\gamma_x^2}{\gamma_T^2}$ . Expression dans laquelle $\gamma_T$ est la valeur de l'accélération transversale au projectile ($\gamma_T{}^2=\gamma_y{}^2+\gamma_z{}^2$).

Tous les calculs seront bien entendu réalisés en remplaçant les valeurs d'accélérations mesurées par la centrale inertielle ($\gamma_X$, $\gamma_Y$, $\gamma_Z$, $\gamma_T$) par les valeurs corrigées ($\gamma_{CX}$,$\gamma_{CY}$,$\gamma_{CZ}$,$\gamma_{cT}$).

$$\gamma_{CX} = \gamma_X\ \Gamma/\gamma\ ;\ \gamma_{CY} = \gamma_Y\ \Gamma/\gamma\ ;\ \gamma_{CZ} = \gamma_Z\ \Gamma/\gamma\ ;\ \gamma_{CT}{}^2 =\gamma_{CY}{}^2+\gamma_{CZ}{}^2.$$

Les angles d'Euler sont ensuite déterminés par calcul. Il suffit de combiner membre à membre les expressions vectorielles : $\vec{V}=U\vec{i} - \Lambda\ (\gamma_{cy}\vec{j} + \gamma_{cz}\vec{k})$ et $\vec{\Gamma} = \gamma_{cx}\vec{i} + \gamma_{cy}\vec{j} + \gamma_{cz}\vec{k}$

Ce qui permet d'éliminer l'accélération transversale et donne: $\vec{V} + \vec{\Gamma} = (U + \Lambda\ \gamma_{cx})\vec{i}$

Les composantes de cette somme vectorielle sur les axes du repère fixe sont donc :

$$V_x \; + \; \Lambda\Gamma_x \; = \; (U \; + \; \Lambda\gamma_{cx}) \quad \vec{i}\,\vec{I}$$

$$V_y \; + \; \Lambda\Gamma_y \; = \; (U \; + \; \Lambda\gamma_{cx}) \quad \vec{i}\,\vec{J}$$

$$V_z \; + \; \Lambda\Gamma_z \; = \; (U \; + \; \Lambda\gamma_{cx}) \quad \vec{i}\,\vec{K}$$

La définition des angles d'Euler étant par ailleurs

$\vec{i}\,\vec{I} = \cos\theta\,\cos\psi$
$\vec{i}\,\vec{J} = \cos\theta\,\sin\psi$
$\vec{i}\,\vec{K} = \sin\theta.$

On en déduit aisément et sans indétermination les différents angles d'Euler par les formules suivantes :

Angle d'assiette $\theta$ (compris entre $-\pi/2$ et $+\pi/2$)

$$\theta = \arcsin\left(\frac{V_z + \Lambda\,\Gamma_z}{U + \Lambda\gamma_{cx}}\right)$$

Angle de cap $\psi$ (compris entre $-\pi$ et $+n$) :

$$\cos\psi = \frac{V_x + \Lambda\Gamma_x}{(U + \Lambda\gamma_{cx})\cos\theta}$$

$$\sin\psi = \frac{V_y + \Lambda\Gamma_y}{(U + \Lambda\gamma_{cx})\cos\theta}$$

L'angle de roulis nécessite un autre calcul qui fait intervenir les produits scalaires successifs membre à membre de l'expression $\gamma_{cy}\,\vec{j} + \gamma_{cz}\,\vec{k} = \dfrac{U\,\vec{i} - \vec{V}}{\Lambda}$ par les vecteurs unitaires $\overrightarrow{I,J,K}$ du repère fixe.
(cette expression est issue de l'égalité déjà rencontrée précédemment : $\vec{V} = U\,\vec{i} - \Lambda\,(\gamma_{cy}\,\vec{j} + \gamma_{cz}\,\vec{k})$).

On en déduit l'angle de roulis après résolution des équations obtenues. Les différents produits scalaires des vecteurs unitaires sont bien sûr bien connus de l'Homme du Métier. Ils sont donnés par la matrice permettant le passage d'un repère projectile à un repère fixe avec les angles d'Euler.

L'angle de roulis $\varphi$ est donc défini par :

$$\cos\varphi = \frac{\gamma_{z0}\gamma_{cz} + \gamma_{y0}\gamma_{cy}}{\gamma_{cy}^2 + \gamma_{cz}^2}$$

$$\sin\varphi = \frac{\gamma_{z0}\gamma_{cy} - \gamma_{y0}\gamma_{cz}}{\gamma_{cy}^2 + \gamma_{cz}^2}$$

Expressions dans lesquelles :

$$\gamma_{y0} \; = \; (V_x\,\sin\psi \; - \; V_y\,\cos\psi) \; / \; \Lambda,$$

$$\gamma_{z0} = (U \sin\theta - V_z) / \Lambda\cos\theta \text{ et } U^2 = V^2 - \Lambda^2\gamma_{cT}^2.$$

Lorsque le projectile se trouve en phase de vol balistique, le vecteur vitesse est dirigé suivant l'axe du projectile (le vent étant supposé nul, ce qui est une hypothèse dont la validité a été vérifiée par des simulations statistiques). Dans ce cas l'accélération transversale $\gamma_T$ est voisine de zéro. Les formules précédentes donnant les angles d'assiette et de cap restent valable en posant arbitrairement $\Lambda=0$. Ce qui donne :

$\theta = \arcsin (V_Z/V)$ ; $\psi = \arcsin (V_Y/V\cos\theta)$ (U étant dans ce cas égal à V).

L'angle de roulis s'exprime par contre à $2\pi$ près en fonction des vitesses angulaires de tangage (q) et lacet (r) mesurées par la centrale inertielle embarquée.

$$\cos\varphi = \frac{q}{\sqrt{q^2+r^2}} \qquad \sin\varphi = \frac{-r}{\sqrt{q^2+r^2}}$$

Bien entendu le procédé selon l'invention sera mis en oeuvre par un algorithme de programmation incorporé dans une mémoire ou registre du calculateur électronique 11 du projectile. Ce calculateur incorpore par ailleurs les autres algorithmes assurant le pilotage du projectile, c'est à dire les commandes des gouvernes 8 en fonction de la loi de navigation retenue. Ces algorithmes de pilotage ne sont pas décrits ici et ne font pas l'objet de la présente invention.

A titre d'exemple on a réalisé des simulations par Monte Carlo avec un projectile d'artillerie de 155 mm, sous-calibré, aérostabilisé et piloté par deux plans « canard ».

Les principales données communes prises en compte sont les suivantes :

La fréquence propre du mouvement pendulaire du projectile piloté est voisine de 1 Hz.

La vitesse d'autorotation moyenne est proche de 5 Hz.

La fréquence de localisation GPS est proche de 10 Hz, le modèle d'erreur utilisé est conforme aux normes du GPS militaire type P/Y.

Le vent est considéré comme une variable aléatoire à distribution normale à moyenne nulle dans une direction données. Les valeurs numériques utilisées sont issues de la norme MIL Std 201 B.

La centrale inertielle est équipée de gyromètres de roulis, tangage et lacet dont les erreurs sont indépendantes, normales et caractérisées par les écart-types suivant :

Biais (erreur à vitesse de rotation nulle) : 0,03 °/s
Proportionnalité : 0,4 $10^{-3}$

La centrale inertielle est également équipée d'accéléromètres dont les erreurs normales et indépendantes sont caractérisées par les écart-types suivants :

Biais (erreur à accélération nulle) : 0,1 m/s$^2$
Proportionnalité : 2 $10^{-3}$

On a simulé :

- d'une part une méthode d'initialisation classique supposée parfaite selon laquelle, l'axe du projectile est aligné avec une direction du vecteur vitesse, à la fin de la phase balistique, l'angle de roulis étant estimé lors d'une phase préliminaire de pilotage, en appliquant successivement des ordres de pilotage de référence,
- et d'autre part le procédé selon l'invention dans lequel les angles d'Euler sont périodiquement réévalués et les accélérations mesurées par la centrale inertielle sont systématiquement corrigées en fonction des valeurs calculées à partir du GPS.

Le tableau ci-après présente les performances obtenues dans chacun des cas. Les divers paramètres mesurés sont définis de la façon suivante :

La portée maximale est la portée cible maximale accessible avec une précision décamétrique par vent nul.

La précision obtenue à 60 Km est celle obtenue par les coups atteignant effectivement le voisinage de la cible (valeur du rayon du cercle équiprobable).

La fiabilité du tir à 60 km est égale à la proportion du nombre de coups atteignant effectivement le voisinage de la cible.

Le tableau suivant présente la comparaison des résultats obtenus par simulation numérique utilisant la méthode de Monte Carlo.

|  | Portée maximale | Précision à 60 km | Fiabilité du tir à 60 km |
|---|---|---|---|
| **Procédé traditionnel** | 61 km | < 10 m | ≈ 60 % |
| **Procédé selon l'invention** | 65 km | < 10 m | > 99 % |

On constate donc, sur cet exemple, que le procédé selon l'invention permet d'augmenter sensiblement la portée de tir (6% de plus) mais surtout que ce procédé permet d'augmenter très notablement la fiabilité du tir qui devient supérieure à 99%.

Cette fiabilité étant assurée par ailleurs avec une centrale inertielle de performances moyennes et de coût réduit.

L'invention a été décrite ici dans une application au tir d'un projectile planant à partir d'un canon.

Il est bien entendu possible de la mettre en oeuvre pour tout type de projectile guidé, tel que roquette, drone ou missile. Le procédé permet alors de réduire les coûts en autorisant, à performances équivalentes, l'emploi de composants inertiels plus rustiques.

## Revendications

1. Procédé de contrôle de la trajectoire d'un projectile girant (1), procédé dans lequel on mesure au moyen d'une centrale inertielle (10) les composantes $\gamma_X$, $\gamma_Y$, $\gamma_Z$ du vecteur accélération Y du projectile suivant trois axes dans un repère lié au projectile de façon à élaborer les ordres de pilotage de la trajectoire du projectile dans lequel :

   - on mesure également périodiquement à l'aide d'un système de positionnement par satellite (GPS) (9) les composantes $V_X$, $V_Y$, $V_Z$ du vecteur vitesse V du projectile suivant trois axes dans un repère terrestre GX, GY, GZ,
   - on évalue à partir de ces mesures $V_X$, $V_Y$, $V_Z$ les composantes $\Gamma_X$, $\Gamma_Y$, $\Gamma_Z$ $\Gamma_Z$) du vecteur accélération $\Gamma$ dans le même repère terrestre GX, GY, GZ,
   - on recalcule, à chacune de ces mesures et évaluations périodiques par le GPS, les valeurs des angles d'Euler du projectile en combinant les résultats des mesures de vitesse V et accélération $\Gamma$ données par le GPS (9) et celles de l'accélération $\gamma$ données par la centrale inertielle (10), **caractérisé en ce que** pour les calculs des angles d'Euler et/ou de pilotage on utilise, en lieu et place des valeurs d'accélérations $Y_X$, $Y_Y$, $Y_Z$ mesurées par la centrale inertielle (10), des valeurs d'accélérations dites corrigées :

   $$\gamma_{CX} = \gamma_X \ \Gamma/\gamma \ ; \ \gamma_{CY} = \gamma_Y \ \Gamma/\gamma \ ; \ \gamma_{CZ} = \gamma_Z \ \Gamma/\gamma$$

   expressions dans lesquelles $\Gamma = \sqrt{\left(\Gamma_X^2 + \Gamma_Y^2 + \Gamma_Z^2\right)}$ est la norme du vecteur accélération du projectile dans le repère terrestre tel qu'évalué grâce au système de positionnement (9) et $\gamma = \sqrt{\left(\gamma_X^2 + \gamma_Y^2 + \gamma_Z^2\right)}$ est la norme du vecteur accélération du projectile dans le repère lié au projectile tel que mesuré par la centrale inertielle (10).

2. Procédé de contrôle de la trajectoire d'un projectile girant selon la revendication 1 et ayant une architecture de type canard, procédé dans lequel l'évaluation des angles d'Euler est réalisée pendant la phase de vol piloté à partir d'un calcul de la constante de temps d'incidence $\Lambda = \dfrac{-Ps - \sqrt{\Delta'}}{\Gamma^2}$ , expression dans laquelle $P_s$ est le produit scalaire du vecteur vitesse V et du vecteur accélération $\Gamma$ mesurés ou calculés à partir du GPS (9) , Ps=V.$\Gamma$, et $\Delta'$ est un

discriminant réduit $\Delta'=(\Gamma^2 V^2 - P_{\check{s}}^2)\dfrac{\gamma_{\check{c}x}^2}{\gamma_{\check{c}T}^2}$ , expression dans laquelle $\gamma_{CT}$ est une valeur corrigée de l'accélération transversale au projectile (1) $Y_{CT}=\sqrt{(Y^2_{CY}+\gamma^2_{CZ})}$ .

3. Procédé de contrôle de la trajectoire d'un projectile girant selon une des revendications 1 ou 2, procédé dans lequel, lorsque le projectile (1) est en phase de vol balistique, on force la valeur de la constante de temps d'incidence A à zéro et on calcule les angles d'Euler du projectile par les formules suivantes :

   - les angles d'assiette $\theta$ et de cap $\psi$ sont égaux à :

     $\theta = \arcsin (V_Z/V)$ ; $\psi = \arcsin (V_Y/V\cos\theta)$

   - l'angle de roulis $\varphi$ étant défini par :

$$\cos\varphi=\frac{q}{\sqrt{q^2+r^2}} \qquad \sin\varphi=\frac{-r}{\sqrt{q^2+r^2}}$$

expressions dans lesquelles q et r sont respectivement les vitesses angulaires de tangage et de lacet du projectile dans un repère lié au projectile (1), vitesses mesurées par la centrale inertielle (10).

4. Procédé de contrôle de la trajectoire d'un projectile girant selon la revendication 2, procédé dans lequel, lorsque le projectile (1) est en phase de vol piloté :

on évalue les angles d'Euler du projectile par les formules suivantes :

   - angle d'assiette $\theta$ compris entre $-\pi/2$ et $+\pi/2$ :

$$\theta=\arcsin\left(\frac{V_Z + \Lambda\,\dot{\Gamma}_z}{U + \Lambda\gamma_{cx}}\right)$$

   - angle de cap $\psi$ compris entre $-\pi$ et $+\pi$ :

$$\cos\psi = \frac{V_X + \Lambda\Gamma_X}{(U + \Lambda\gamma_{CX})\cos\theta}$$

$$\sin\psi = \frac{V_Y + \Lambda\Gamma_Y}{(U + \Lambda\gamma_{CX})\cos\theta}$$

   - angle de roulis $\varphi$ :

$$\cos\varphi = \frac{\gamma_{z0}\gamma_{cz} + \gamma_{y0}\gamma_{cy}}{\gamma_{\check{c}y}^2 + \gamma_{\check{c}z}^2}$$

$$\sin\varphi = \frac{\gamma_{z0}\gamma_{cy} - \gamma_{y0}\gamma_{cz}}{\gamma_{\check{c}y}^2 + \gamma_{\check{c}z}^2}$$

expressions dans lesquelles :

$$\gamma_{Y0} = (V_X \sin\psi - V_Y \cos\psi) / \Lambda,$$

$$\gamma_{Z0} = (U \sin\theta - V_Z) / \Lambda\cos\theta$$

et

$$U^2 = V^2 - \Lambda^2\gamma_{cT}{}^2.$$

**5.** Procédé de contrôle de la trajectoire d'un projectile girant selon une des revendications 1 à 4, procédé dans lequel, l'évaluation des composantes $\Gamma_X$, $\Gamma_Y$, $\Gamma_Z$ du vecteur accélération $\Gamma$ dans le repère terrestre $G_X$, $G_Y$, $G_Z$ est réalisée à partir de N mesures périodiques effectuées par le GPS (9) des composantes $V_X$, $V_Y$, $V_Z$ du vecteur vitesse V du projectile (1) dans le même repère terrestre et avec un intervalle d'échantillonage $\Delta$t, mesures auquel est appliqué un filtrage de Kalman.

**Patentansprüche**

**1.** Verfahren zum Steuern der Flugbahn eines sich drehenden Projektils (1), bei welchem Verfahren mit Hilfe einer Trägheitsnavigations-Zentrale (10) die Komponenten $Y_X$, $Y_Y$, $Y_Z$ des Beschleunigungsvektors Y des Projektils entlang dreier Achsen in einem mit dem Projektil verbundenen Koordinatensystem derartig gemessen werden, um die Größenordnungen zur Steuerung der Flugbahn des Projektils zu erstellen, bei welchem:

- ebenfalls periodisch mit Hilfe eines von Satelliten gestützten Systems zur Positionsbestimmung (GPS) (9) die Komponenten $V_X$, $V_Y$, $V_Z$ des Geschwindigkeitsvektors V des Projektils entlang dreier Achsen in einem terrestrischen Koordinatensystem GX, GY, GZ gemessen werden,
- ausgehend von diesen Messungen $V_X$, $V_Y$, $V_Z$ die Komponenten $\Gamma_X$, $\Gamma_Y$, $\Gamma_Z$ des Beschleunigungsvektors $\Gamma$ in demselben terrestrischen Koordinatensystem GX, GY, GZ bewertetwerden,
- bei jeder dieser periodischen Messungen und Bewertungen durch das GPS die Werte der Euler'schen Winkel des Projektils neu berechnetwerden, indem die Messresultate von Geschwindigkeit V und Beschleunigung $\Gamma$, welche durch das GPS (9) ausgegeben werden, und diejenigender Beschleunigung Y, welche durch die Trägheitsnavigations-Zentrale (10) ausgegeben werden, kombiniert werden,

**dadurch gekennzeichnet, dass** zur Berechnung der Euler'schen Winkel und/oder der Steuerung anstelle und anstatt der von der Trägheitsnavigations-Zentrale (10) gemessenen Beschleunigungswerte $Y_X$, $Y_Y$, $Y_Z$ so genannte korrigierte Beschleunigungswerte verwendet werden:

$$\gamma_{CX} = \gamma_X \Gamma / \gamma \; ; \quad \gamma_{CY} = \gamma_Y \Gamma / \gamma \; ; \quad \gamma_{CZ} = \gamma_Z \Gamma / \gamma$$

in welchen Ausdrücken $\Gamma = \sqrt{(\Gamma_X^2 + \Gamma_Y^2 + \Gamma_Z^2)}$ die Größe des Beschleunigungsvektors des Projektils in dem terrestrischen Koordinatensystem ist, wie es Dank des Systems zur Positionsbestimmung (9) bewertet wurde, und

$\gamma = \sqrt{(\gamma_X^2 + \gamma_Y^2 + \gamma_Z^2)}$ die Größe des Beschleunigungsvektors des Projektils in dem mit dem Projektil verbundenen Koordinatensystem ist, wie es durch die Trägheitsnavigations-Zentrale(10)gemessen wurde.

**2.** Verfahren zum Steuern der Flugbahn eines sich drehenden Projektils (1) nach Anspruch 1 und welches eine entenartige Architektur besitzt, bei welchem Verfahren die Bewertung der Euler'schen Winkel während der gesteuerten Flugphase erzielt wird, ausgehend von einer Berechnung der Einfluss-Zeitkonstante $\Lambda = \dfrac{-Ps - \sqrt{\Delta'}}{\Gamma^2}$ , bei welchem Ausdruck $P_s$ das Skalarprodukt des Geschwindigkeitsvektors V und des Beschleunigungsvektors $\Gamma$ ist, welche ausgehend des GPS(9) gemessen oder berechnet werden, $P_s = V.\Gamma$, und $\Delta'$ ist die erste Ableitung

$$\Delta' = (\Gamma^2 V^2 - P_S^2)\frac{\gamma_{CX}^2}{\gamma_{CT}^2}$$ , bei welchem Ausdruck $\gamma_{CT}$ ein korrigierter Wert der Querbeschleunigung auf das

Projektil (1) $\gamma_{CT} = \sqrt{(\gamma_{CY}^2 + \gamma_{CY}^2)}$ ist.

3. Verfahren zum Steuern der Flugbahn eines sich drehenden Projektils nach einem der Ansprüche 1 oder 2, bei welchem Verfahren, wenn sich das Projektil (1) in der Phase des ballistischen Flugs befindet, der Wert der Einfluss-Zeitkonstante A auf Null gesetzt wird und die Euler'schen Winkel des Projektils durch die folgenden Formeln berechnet werden:

   - die Neigungswinkel $\theta$ und Kurswinkel $\psi$ sind gleich:

   $\theta$ = arcsin $(V_Z/V)$ ; $\psi$ = arcsin $(V_Y/V\cos\theta)$

   - wobei der Rollwinkel $\varphi$ bestimmt wird durch:

$$\cos\varphi = \frac{q}{\sqrt{q^2 + r^2}} \quad \sin\varphi = \frac{-r}{\sqrt{q^2 + r^2}}$$

   wobei in den Ausdrücken q und r jeweils Nick- und Gier-Winkelgeschwindigkeiten des Projektils in einem mit dem Projektil (1) verbundenen Koordinatensystem sind, wobei die Geschwindigkeiten von der Trägheitsnavigations-Zentrale(10) gemessen werden.

4. Verfahren zum Steuern der Flugbahn eines sich drehenden Projektils nach Anspruch 2, bei welchem Verfahren, wenn das Projektil (1) sich in der gesteuerten Flugphase befindet:

   die Euler'schen Winkel des Projektils durch die folgenden Formeln bewertet werden:

   - Neigungswinkel $\theta$ der zwischen $-\pi/2$ und $+\Pi/2$ liegt:

$$\theta = \arcsin(\frac{V_z + \Lambda\Gamma_z}{U + \Lambda\gamma_{CX}})$$

   - Flugwinkel $\psi$ der zwischen $-\pi$ und $+\Pi$ liegt:

$$\cos\Psi = \frac{V_X + \Lambda\Gamma_X}{(U + \Lambda\gamma_{CX})\cos\theta}$$

$$\sin\Psi = \frac{V_Y + \Lambda\Gamma_Y}{(U + \Lambda\gamma_{CX})\cos\theta}$$

   - Rollwinkel $\varphi$:

$$\cos\varphi = \frac{\gamma_{Z0}\gamma_{CZ} + \gamma_{Y0}\gamma_{CY}}{\gamma_{CY}^2 + \gamma_{CZ}^2}$$

$$\sin\varphi = \frac{\gamma_{Z0}\gamma_{CY} - \gamma_{Y0}\gamma_{CZ}}{\gamma_{CY}^2 + \gamma_{CZ}^2}$$

wobei in den Ausdrücken:

$$\gamma_{Y0} = (V_X \sin\psi - V_Y \cos\psi) / \Lambda,$$

$$\gamma_{Z0} = (U \sin\theta - V_Z) / \Lambda\cos\theta$$

und

$$U^2 = V^2 - \Lambda^2\gamma_{CT}^2.$$

5. Verfahren zum Steuern der Flugbahn eines sich drehenden Projektils nach einem der Ansprüche 1 bis 4, bei welchem Verfahren die Bewertung der Komponenten $\Gamma_X$, $\Gamma_Y$, $\Gamma_Z$ des Beschleunigungsvektors $\Gamma$ in dem terrestrischen Koordinatensystem $G_X$, $G_Y$, $G_Z$ ausgehend von durch das GPS (9) durchgeführten N periodischen Messungen der Komponenten $V_X$, $V_Y$, $V_Z$ des Geschwindigkeitsvektors V des Projektils (1) in demselben terrestrischen Koordinatensystem und mit einem Abtastintervall $\Delta$t bewerkstelligt wird, wobei auf die Messungen ein Kalman-Filter angewendet wird.

## Claims

1. A process to control the trajectory of a spinning projectile (1), process in which the components $\gamma_x$, $\gamma_y$, $\gamma_z$ the projectile's acceleration vector $\gamma$ are measured by means of an inertial unit (10) in three axes within a reference linked to the projectile so as to prepare the piloting commands for the projectile's trajectory, process in which:

   - the velocity vector V components $V_X$, $V_Y$, $V_Z$ of the projectile are measured using a global positioning system (GPS) (9) along three axes within a land reference $G_X$, $G_Y$, $G_Z$,
   - based on these measurements $V_X$, $V_Y$, $V_Z$, the components $\Gamma_X$, $\Gamma_Y$, $\Gamma_Z$ of the acceleration vector $\Gamma$ are evaluated in the same land reference GX, GY, GZ,
   - at each of these measurements and periodical evaluations by the GPS, the Euler angles of the projectile are recalculated by combining the resultants of the velocity V and acceleration $\Gamma$ measurements given by the GPS (9) and those of the acceleration $\gamma$ given by the inertial unit (10), **characterised in that** for the calculations of the Euler angles and/or the piloting, instead of the acceleration values $\gamma_x$, $\gamma_y$, $\gamma_z$ measured by the inertial unit (10), so-called corrected acceleration values are used:

   $$\gamma_{CX} = \gamma_x \ \Gamma/\gamma \ ; \ \gamma_{CY} = \gamma_Y \ \Gamma/\gamma \ ; \ \gamma_{CZ} = \gamma_z \ \Gamma/\gamma$$

   expressions in which $\Gamma = \sqrt{(\Gamma 2_X^2 + \Gamma_Y^2 + \Gamma_Z^2)}$ is the norm of the projectile's acceleration vector in the land reference such as evaluation thanks to the positioning system (9) and $\gamma = \sqrt{(\gamma_X^2 + \gamma_Y^2 + \gamma_Z^2)}$ is the norm of the projectile's acceleration vector in the reference linked to the projectile such as measured by the inertial unit (10).

2. A process to control the trajectory of a spinning projectile according to Claim 1 having a canard type architecture, wherein the evaluation of the Euler angles is carried out during the piloted flight phase using a calculation of the constant of the incidence time $\Lambda = \dfrac{-P_S - \sqrt{\Delta'}}{\Gamma^2}$, expression in which $P_s$ is the scalar product of the velocity vector V and the acceleration vector $\Gamma$ measured or calculated from the GPS (9) $P_s = V.\Gamma$, and $\Delta'$ is a reduced

discriminant $\Delta' = (\Gamma^2 V^2 - P_S^2) \dfrac{\gamma_{CX}^2}{\gamma_{CT}^2}$ , expression in which $\gamma_{CT}$ is a corrected value of the transversal acceleration of the projectile $(\gamma_{CT} = \sqrt{(\gamma_{CY}^2 + \gamma_{CZ}^2)})$ .

**3.** A process to control the trajectory of a spinning projectile according to one of Claims 1 or 2, process wherein, when the projectile (1) is in the ballistic flight phase, the value of the incidence time constant A will be rounded up to zero and the projectile's Euler angles will be calculated using the following formulae:

- the pitch $\theta$ and yaw $\psi$ angles are equal to:

$\theta = \arcsin(V_Z/V)$ ; $\psi = \arcsin(V_Y/V\cos\theta)$

- the roll angle $\varphi$ being defined by:

$$\cos\varphi = \frac{q}{\sqrt{q^2 = r^2}} \qquad \sin\varphi = \frac{-r}{\sqrt{q^2 + r^2}}$$

expressions in which q and r are respectively the angular pitch and yaw velocities of the projectile in a reference linked to the projectile (1), velocities measured by the inertial unit (10).

**4.** A process to control the trajectory of a spinning projectile according to Claim 2, process wherein, when the projectile (1) is in the piloted flight phase:

- the Euler angles of the projectile are evaluated by the following formulae:
- pitch angle $\theta$ between $-\pi/2$ and $+\pi/2$ :

$$\theta = \arcsin\left(\frac{V_Z + \Lambda\Gamma_Z}{U + \Lambda\gamma_{CX}}\right)$$

- yaw angle $\psi$ between $-\pi$ and $+\pi$ :

$$\cos\psi = \frac{V_X + \Lambda\Gamma_X}{(U + \Lambda\gamma_{CX})\cos\theta}$$

$$\sin\psi = \frac{V_Y + \Lambda\Gamma_Y}{(U + \Lambda\gamma_{CX})\cos\theta}$$

- roll angle $\varphi$:

$$\cos\varphi = \frac{\gamma_{Z0}\gamma_{CZ} + \gamma_{Y0}\gamma_{CY}}{\gamma_{CY}^2 + \gamma_{CZ}^2}$$

$$\sin \varphi = \frac{\gamma_{z0}\gamma_{cy} + \gamma_{y0}\gamma_{cz}}{\gamma_{cy}^2 + \gamma_{cz}^2}$$

expressions in which:

$$\gamma_{Y0} = (V_X \sin\psi - V_Y \cos\psi) / \Lambda,$$

$$\gamma_{Z0} = (U \sin\theta - V_Z) / \Lambda\cos\theta$$

and

$$U^2 = V^2 - \Lambda^2\gamma_{cT}^2.$$

5. A process to control the trajectory of a spinning projectile according to one of Claims 1 to 4, process wherein the evaluation of the components $\Gamma_X, \Gamma_Y, \Gamma_Z$ of the acceleration vector $\Gamma$ in the land reference $G_X$, $G_Y$, $G_Z$ will be carried out from N periodical measurements made by the GPS (9) of components $V_X$, $V_Y$, $V_Z$ of the velocity vector V of the projectile in the same land reference and with a sampling interval $\Delta t$, measurements to which a KALMAN filter will be applied.

Fig 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2786561
- US 6163021 A
- DE 4025515
- EP 905473 A